# EUROPEAN PATENT SPECIFICATION

(11) **EP 2 210 486 B1**
(45) Date of publication and mention of the grant of the patent: **02.11.2016**
(21) Application number: 10151510.4
(22) Date of filing: 25.01.2010
(51) Int. Cl.: A01K 89/01, A01K 89/00

(54) **Fishing reel**
Angelrolle
Moulinet de pêche

(30) Priority: 26.01.2009 JP 2009014547; 04.02.2009 JP 2009024033
(43) Date of publication of application: 28.07.2010
(73) Proprietor: Globeride, Inc., Higashikurume-shi Tokyo 203-8511 (JP)
(72) Inventor: Kanou, Shuta, Higashikurume-shi Tokyo 203-8511 (JP)
(74) Representative: Grünecker Patent- und Rechtsanwälte PartG mbB

(56) References cited:
- EP-A1- 1 994 825
- DE-U1-202005 016 007
- JP-U- 55 086 475

## Description

### [Technical Field]

The present invention relates to a fishing reel which includes a fishline clipping apparatus for clipping a fishline.

### [Background]

In fishing reels, as described in JP-UM-B-4-8780 or Japanese Patent No. 3330481, there is conventionally known to the general public a fishline clipping apparatus (a fishline clip) for clipping a fishline which is provided in an appropriate position on a fishing reel such as a spool of a spinning reel or a side plate of a multiplier reel.

A fishline clipping apparatus disclosed in JP-UM-B-4-8780 has a construction in which a fishline holder rest is provided which has a through hole in an outer wall of a reel main body, a shaft portion of a fishline holder (a fishline clip) having a large-diameter head portion is inserted in the through hole so as to slide vertically, and the shaft portion of the fishline holder is retained elastically by a spring member, whereby a fishline is attached between the large-diameter head portion and the fishline holder so as to be clipped therebetween.

A fishline clipping apparatus disclosed in Japanese Patent No. 3330481 has a construction in which a fishline clipping member which is formed integrally of a rubber is inserted and retained in a through hole formed in a constituent member of a spool or a reel main body.

In addition to those fishline clipping apparatuses, DE20 2005 016007 U1 discloses a holding means which has a clip for fixing a fishline on a side of a spool (an outer side of a spool) which can be accessed from the outside. In addition, this holding means has a guiding projecting portion extending radially on an opposite side of the spool to the side where the clip is provided (an inner side of the spool). This guiding projecting portion is guided within an opening which extends along a longitudinal direction. The guiding projecting portion is connected to a compression spring supported in an interior of the spool at a free end thereof. The holding means is mounted on the spool so as to move in two directions through spring displacement against a force exerted by the compression spring.

Related prior art is also disclosed in JP 55086475 and EP 1 994 825.

### Summary of the Invention

According to JP-UM-B-4-8780, when in use, although there is a case in which the fishline clip is used for a bait placing operation (an operation in which a fishline is clipped in a position where an appropriate releasing amount of the fishline is attained for placing a bait, the fishline is then wound, and thereafter, when the fishline is released again, the releasing of the fishline is stopped automatically in the position where it was clipped before), an abrupt load is directly exerted on the fishline holder when releasing the fishline is stopped, leading to a possibility that the fishline holder fails or the fishline is damaged.

According to Japanese Patent 3330481, since the fishline clip is molded integrally of a rubber, there is a possibility that a fishline clipping portion is turned outwards, allowing the fishline to be unhooked. Because of this, when the fishline clip is used for the bait placing operation, there is caused a possibility that the fishline clip is deformed by an abrupt load exerted thereon to be slipped off from the spool.

Although the holding means at the spool disclosed in DE20 2005 016 007 U1 can be used for such a bait placing operation, since the construction is adopted in which the fishline is fixed and held by the clip, the clipping state is not stabilized and hence, the fishline is easy to be unhooked. In addition, since the clip is fixed in the specific position, there is a need to consider the orientation of the fishline, and hence, there occurs a case where the holding means cannot easily be used as the fishline clip.

Namely, with the fishline clipping apparatus (the fishline clip) of any of the related-art techniques, the two functions, the normal fishline stopping function of stopping the fishline at its terminal end when it is completely wound and the bait placing function of regulating (controlling) the releasing length of the fishline, cannot be used in a discriminable fashion without causing any problem in actual fishing, and the fishline clipping apparatuses of the related-art are difficult to deal with a variety of conditions in fishing.

The invention has been made with a view to solving the problems described above, and an object thereof is to provide a fishing reel which enables an easy fishline holding and realizes a reduction in load exerted when a fishline is released even in the event that an abrupt load is exerted on the fishline which is clipped at a fishline clipping portion when releasing the fishline is stopped during a use in a bait placing operation to thereby prevent a damage of the fishline clipping portion and a damage to or breakage of the fishline.

The subject matter of the present invention is provided in claim 1. With a view to attaining the object, according to an aspect of the invention, there is provided a fishing reel comprising a fishline clipping apparatus in which a through hole is formed at an appropriate portion of a spool and a shaft portion of a clipping member having a fishline clipping portion is inserted in the through hole to be retained elastically therein so as to be prevented from being slipped off, whereby a fishline is held between the fishline clipping portion and the spool, and the shaft portion of the fishline clipping member is enabled to move in a direction which is at a right angle to an axial direction of the shaft portion against a biasing force exerted by an elastic member.

In addition, the through hole is preferably formed into an elongated hole, and the elastic member is preferably a spring member for biasing the shaft portion to one side of the elongated hole of the through hole.

Further, a damper member is preferably provided between the spool and the fishline clipping portion of the fishing reel.

The fishline can easily be stopped since the fishline can be held between the spool and the fishline clipping portion by inserting the shaft portion of the fishline clipping apparatus in the through hole formed in the spool and allowing the shaft portion to be retained so as to be prevented from being slipped off in the axial direction against the biasing force of the elastic member. In addition, by allowing the shaft portion retained in the spool to move elastically in the direction at a right angle to the shaft portion, even in the event that an abrupt load is exerted on the fishline or the fishline clipping portion when releasing the fishline is stopped during the use in a bait placing operation, the fishline clipping portion moves in the fishline releasing direction against the biasing force of the elastic member so as to realize a reduction in load exerted on the fishline, thereby making it possible to prevent the damage of the fishline clipping portion or the damage to or breakage of the fishline. Consequently, according to the invention, the fishline can easily be clipped and the reduction in load can be realized which is exerted when the fishline is released even in the event that the abrupt load is exerted on the fishline which is clipped at the fishline clipping portion when releasing the fishline is stopped during the use in the bait placing operation to thereby prevent the damage of the fishline clipping portion and the damage to or breakage of the fishline.

The through hole may be formed into the elongated hole, and the elastic member may be the spring member for biasing the shaft portion towards the one side of the elongated hole, which is the through hole, whereby the shaft portion is allowed to move elastically along the through hole, which is the elongated hole, against the biasing force of the spring member. Because of this, the reduction in load to the fishline can be realized, and in association with this, a reduction in load to the fishline clipping apparatus can also be realized.

In addition, a damper member may be provided between the spool and the fishline clipping portion of the fishing reel, whereby even in the event that an abrupt load is applied to the fishline clipping portion, the load can be moderated in a more ensured fashion.

### Brief Description of the Drawings

Fig. 1 is a schematic diagram of a fishing spinning reel according to first to fifth inventive and non-inventive embodiments of the invention.
Fig. 2A is a schematic vertical sectional view of a fishline clipping apparatus formed at a skirt portion of a spool of the spinning reel according to the first non-inventive embodiment which is taken along the line 2A-2A in Fig. 2B.
Fig. 2B is a schematic perspective view of the fishline clipping apparatus formed at the skirt portion of the spool of the spinning wheel according to the first non-inventive embodiment which shows a state resulting when viewed from a direction indicated by an arrow 2B in Fig. 2A.
Fig. 2C is a schematic cross-sectional view of the fishline clipping apparatus formed at the skirt portion of the spool of the spinning wheel according to the first non-inventive embodiment which is taken along the line 2C-2C shown in Fig. 2A.
Fig. 3 is a schematic perspective view showing a fishline clipping apparatus formed at a skirt portion of a spool of a spinning reel according to the second non-inventive embodiment.
Fig. 4A is a schematic vertical sectional view of a fishline clipping apparatus formed at a skirt portion of a spool of a spinning reel according to a third inventive embodiment which is taken along the line 4A-4A in Fig. 4B, and Fig. 4B is a schematic perspective view of the fishline clipping apparatus formed at the skirt portion of the spool of the spinning wheel according to the third inventive embodiment which shows a state resulting when viewed from a direction indicated by an arrow 4B in Fig. 4A.
Fig. 5A is a schematic vertical sectional view of a fishline clipping apparatus formed at a skirt portion of a spool of a spinning reel according to a fourth non-inventive embodiment, and Fig. 5B is a schematic cross-sectional view of the fishline clipping apparatus formed at the skirt portion of the spool of the spinning wheel according to the fourth non-inventive embodiment which is taken along the line 5B-5B shown in Fig. 5A.
Fig. 6A is a schematic vertical sectional view of a fishline clipping apparatus formed at a skirt portion of a spool of a spinning reel according to a fifth non-inventive embodiment, and Fig. 6B is a schematic cross-sectional view of the fishline clipping apparatus formed at the skirt portion of the spool of the spinning wheel according to the fifth embodiment which is taken along the line 6B-6B shown in Fig. 6A.

### Detailed Description of Embodiments

Hereinafter, referring to the drawings, a best mode for carrying out the invention will be described.

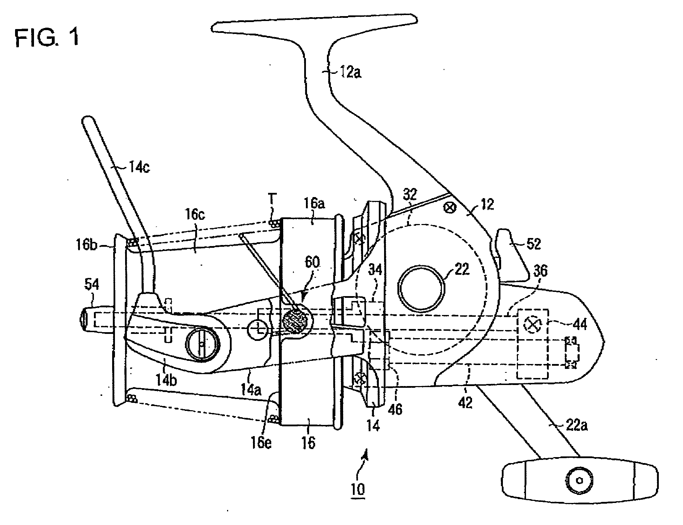

A first non-inventive embodiment will be described based on Figs. 1 to 2C.

As is shown in Fig. 1, a fishing spinning reel 10 includes a reel main body 12 on which a leg portion 12a is formed for attachment to a fishing rod, a rotor 14 disposed rotatably in front of the reel main body 12 and a spool 16 which is provided so as to move backwards and forwards in synchronism with the rotational motion of the rotor 14.

A handle shaft 22 is supported rotatably in the reel main body 12, and a handle 22a, adapted to be operated for a winding operation, is attached to a projecting end portion of the handle shaft 22. A winding drive mechanism for driving the rotor 14 to perform a winding operation is brought into engagement with the handle shaft 22. The winding drive mechanism includes a drive gear 32 which is attached to the handle shaft and in which teeth are formed on an inner surface of its rim and a pinion 34 which meshes with the drive gear 32, which extends in a direction which is at a right angle to the handle shaft 22 and which has a hollow portion formed in an interior thereof so as to extend in an axial direction. The pinion 34 is supported rotatably via a bearing, and a spool shaft 36 is inserted and supported so as to move in the axial direction in the hollow portion. The spool shaft 36 extends in a direction which is at a right angle to the handle shaft 22 and a spool 16 is attached to a distal end side of the spool shaft 36.

An oscillating mechanism is in engagement with the pinion 34 for moving the spool shaft 36 backwards and forwards. The oscillating mechanism includes a worm shaft 42 which extends parallel to the spool shaft 36 and an engagement element 44 which is brought into engagement with a spiral groove formed on an outer circumferential surface of the worm shaft 42 and which is attached to a proximal end portion of the spool shaft 36 with a machine screw. A gear 46 is attached to the end portion of the worm shaft 42 for meshing engagement with the pinion 34, and by the worm shaft 42 being driven to rotate via the pinion 34 and the gear 46, the spool shaft 36 is moved backwards and forwards via the engagement element 44 which is guided within the spiral groove.

The pinion 34 extends towards the spool side, and the rotor 14 is attached to a distal end portion thereof via a nut (not shown). In addition, a rolling one-way clutch (not shown) is attached to an intermediate portion of the pinion 34, and by operating to rotate a switching member 52 which is attached to an exterior of the reel main body 12, the one-way clutch is configured to be switched between an operating state and a non-operating state. In this case, by the switching member 52 being switched to the operating state, a reverse rotation of the handle 22a (the rotor 14) is designed to be prevented.

The rotor 14 includes a cylindrical portion (not shown) which is positioned within a skirt portion (a constituent member) 16a of the spool 16 and a pair of support arms 14a. A bail support member 14b is supported at a front end portion of each support arm 14 so as to rotate between a fishline winding position and a fishline releasing position. A bail 14c is provided between the bail support members 14b for picking up a fishline T which is in a releasable state. As this time, in the bail 14c, one proximal end portion is attached to the bail support member 14b and the other proximal end portion is attached to a fishline guiding portion (not shown) which is provided integrally on the bail support member 14c.

The spool 16 includes a winding barrel portion 16c round which the fishline T is wound between the skirt portion 16a and a flange portion 16b, and the spool 16 is attached to the spool shaft 36 via a drag knob 54.

By adopting the configuration described above, by operating the handle 22a for winding, the rotor 14 is driven to rotate via the drive gear 32 and the pinion 34, and the spool 16 is moved backwards and forwards via the pinion 34 and the oscillating mechanism, whereby a fishline T is wound uniformly round the winding barrel portion 16c of the spool 16 via the fishline guiding portion. In addition, the fishline is released (a casting of a leader) by operating the support members 14b (the bail 14c) to rotate reversely to the fishline releasing position so as to unhook the fishline from the fishline guiding portion and swinging down the fishing rod.

A lever (not shown) adapted to be rotated by operating the switching member (an operating member) 52 which is provided on the exterior of the reel main body 12 so as to project therefrom is provided on the one-way clutch of this embodiment. The one-way clutch is designed to hold the pinion 34 in a reverse rotation preventing state/a free rotation enabling state.

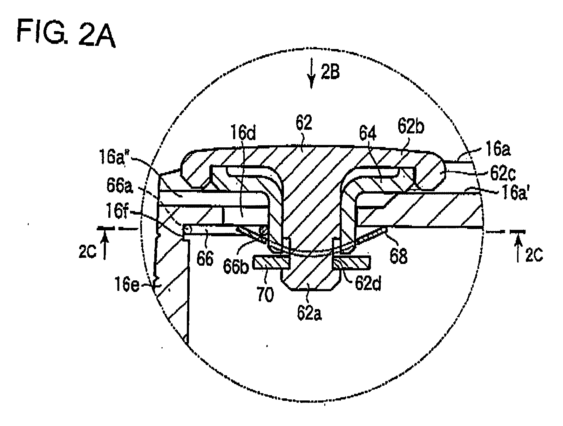

In the spinning reel 10 having the construction that has been described heretofore, as is shown in Figs. 2A to 2C, the skirt portion 16a of the spool 16 includes a recess portion 16a' which is recessed inwards relative to an outermost circumferential surface of the skirt portion 16a via a difference in level provided therebetween. A wall surface formed by the difference in level between the outermost circumferential surface of the skirt portion 16a and the recess portion 16a' is formed into a smooth curved surface for preventing the fishline T from being damaged or cut. A smoothly continuous sloping surface is preferably formed between the outermost circumferential surface of the skirt portion 16a and the recess portion 16a'.

This recess portion 16a' includes a guide portion 16a" where a fishline clipping apparatus 60, which will be described later, is installed. Namely, the skirt portion 16a includes the recess portion 16a' and the guide portion 16a". Here, the guide portion 16a" is surrounded by the recess portion 16a'.

The fishline clipping apparatus 60 is installed in the recess portion 16a' of the skirt portion 16a. Specifically, a through hole 16d is formed in the guide portion 16a" of the recess portion 16a' of the skirt portion 16, and the fishline clipping apparatus 60 is provided in the through hole 16d. The through hole 16d is not completely round but is formed into an elongated hole in which a direction following an axial direction of the spool 16 is long. A stepped wall portion 16e is formed between the skirt portion 16a and the winding barrel portion 16c of the spool 16.

As is shown in Figs. 2A to 2C, the fishline clipping apparatus 60 includes a clipping member 62, a damper member 64, a primary elastic member (a primary spring material) 66 and a secondary elastic member (a secondary spring material) 68. The clipping member 62 is formed of a hard resin material or a metal material. In addition, the damper member 64 is formed of a soft resin material or a rubber material, for example.

The clipping member 62 is formed into a substantially T-shape in section and includes a shaft portion 62a which is disposed so as to penetrate through the through hole 16d and a circular disk portion (a fishline clipping portion) 62b which is formed integrally with the shaft portion 62a and part of which is disposed so as to project further outwards than the outermost circumferential surface of the skirt portion 16a of the spool 16. A flange portion 62c is formed at an end portion of the circular disc portion 62a so as to be oriented towards an outer circumferential surface of the recess portion 16a' of the skirt portion 16a of the spool 16. The shaft portion 62a has a solid cylindrical shape, for example. In the shaft portion 62a, a C-shaped or annular recess portion 62d is formed on a portion which is disposed further inwards than an inner circumferential surface of the skirt portion 16a of the spool 16. A slip-off preventing member 70 for preventing the slip-off of the shaft portion 62a from the through hole 16d is detachably disposed on the recess portion 62d so as to be retained thereon elastically. The secondary elastic member 68 is provided on the shaft portion 62a which is brought into abutment with an inner circumferential surface of the skirt portion 16a of the spool 16 and which biases the shaft portion 62a and the damper member 64 in a direction in which the shaft portion 62a and the damper member 64 are brought into press contact with an outer circumferential surface of the recess portion 16a'of the skirt portion 16a. For example, a plate-shaped disc spring is used as the secondary elastic member 68. Because of this, the secondary elastic member 68 biases the shaft portion 62a of the clipping member 62 downwards in Fig. 2A (towards a side where it approaches the spool shaft 36 shown in Fig. 1).

The damper member 64 is fittingly attached inside the clipping member 62. In the damper member 64, an end portion which is disposed outside the recess portion 16a' of the skirt portion 16a of the spool 16 is disposed inside the flange portion 62d of the circular disc portion 62b of the clipping member 62. The damper member 64 acts as a pressing member (a fishline clipping portion) for pressing the fishline T when the fishline T is actually clipped on an outer surface of the skirt portion 16a of the spool 16. In the damper member 64, an end portion which is disposed further inwards of the inner circumferential surface of the skirt portion 16a of the spool is formed into a cylindrical shape so as to cover an outer circumferential surface of the shaft portion 62a. Because of this, the damper member 64 can reduce a friction produced between the through hole 16d formed in the recess portion 16a' of the skirt portion 16a of the spool 16 and the shaft portion 62a of the clipping member 62 and can receive the primary and secondary elastic members 66, 68. The damper member 64 can moderate a shock produced when the fishline is released during the use in the bait placing operation.

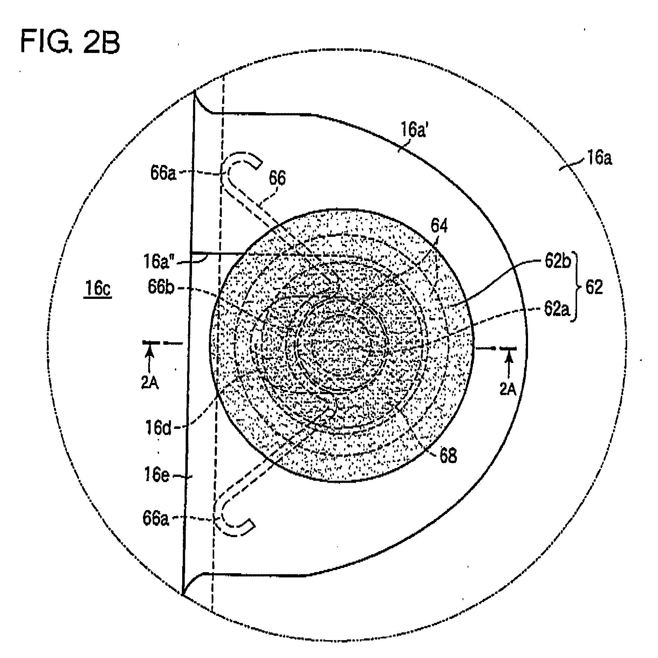

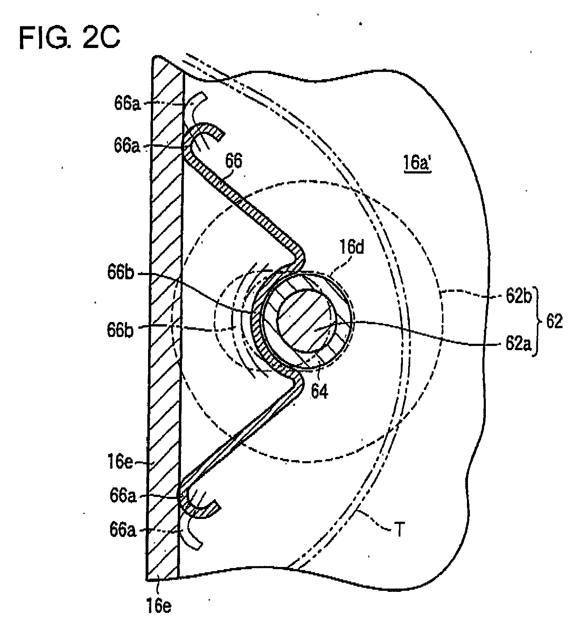

The primary elastic member 66 is disposed outside the damper member 64. As is shown in Figs. 2B and 2C, the primary elastic member 66 is a spring material which has a pair of leg portions 66a and a pressing portion 66b which biases the clipping member 62 and the damper member 64 in a predetermined direction. In the primary elastic member 66, the pair of leg portions 66a is brought into abutment with a recess portion 16f on an inner circumferential surface of the stepped wall portion 16e of the spool 16, and the pressing portion 66b biases the damper member 64 lying in a position situated close to the inner circumferential surface of the stepped wall portion 16e in a direction in which the damper member 64 is spaced apart from the inner circumferential surface of the stepped wall portion 16e. This biasing direction (a longitudinal direction of the through hole 16d) is a direction which is at a right angle to the axial direction of the shaft portion 62a. The longitudinal direction of the through hole 16d formed in the recess portion 16a' of the skirt portion 16a of the spool 16 coincides with a direction which is spaced apart relative to the inner circumferential surface of the stepped wall portion 16e (the fishline releasing direction which is at a right angle to the axial direction of the shaft portion 62a). Because of this, the clipping member 62 and the damper member 64 can move within the through hole 16d against the biasing force of the primary elastic member 66).

The guide portion 16a" for guiding the damper member 64 is formed in the recess portion 16a' of the skirt portion 16a, and the damper member 64 can move along the guide portion 16a". Namely, the clipping member 62 and the damper member 64 can slide in the predetermined direction.

When clipping the fishline T in the fishline clipping apparatus 60, the circular disc portion 62b of the clipping member 62 is pulled against the biasing force of the secondary elastic member 68. In this state, the fishline T is disposed between a surface of the recess portion 16a' of the skirt portion 16a of the spool 16 and the damper member 64. Then, the circular disc portion 62b of the clipping member 62 is released, the line T is clipped on the outer circumferential surface of the recess portion 16a'of the skirt portion 16a of the spool 16 by the damper member 64 and the circular disc portion 62b of the clipping member 62 by virtue of the biasing force of the secondary elastic member 68.

In addition, in the event that a force is exerted on the fishline T when releasing the fishline is stopped during a fishline releasing operation, for example, the clipping member 62 and the damper member 64 can move against the biasing force of the primary elastic member 66 in the fishline releasing direction, that is, towards the front of the spool 16 along the through hole 16d which is at a right angle to the axial direction of the shaft portion 62a. Because of this, even in the event that an abrupt load is exerted on the fishline T and/or the fishline clipping apparatus 60 when releasing the fishline is stopped during the use in the bait placing operation, the clipping member 62 and the damper member 64 move in the fishline releasing direction against the elastic force of the primary elastic member 66. Consequently, a reduction in load can be realized which would otherwise be exerted on the line T and/or the fishline clipping apparatus 60 when releasing the fishline is so stopped, thereby making it possible to prevent a damage of the fishline clipping apparatus 60 and/or the damage to or breakage of the line T.

In addition, the through hole 16d is provided in the recess portion 16a' of the skirt portion 16a of the spool 16 of the spinning reel 10, and the clipping member 62 of the fishline clipping apparatus 60 may be inserted in the through hole 16d so as to be prevented from being slipped off therefrom by use of the secondary elastic member 68 such as the plate-like coned disc spring. Because of this, a radially inward spatial limitation is imposed little on the skirt portion 16a of the spool 16, and a sufficient distance can be ensured with the rotor 14 to use similarly the fishline clipping apparatus 60 on a small spinning reel.

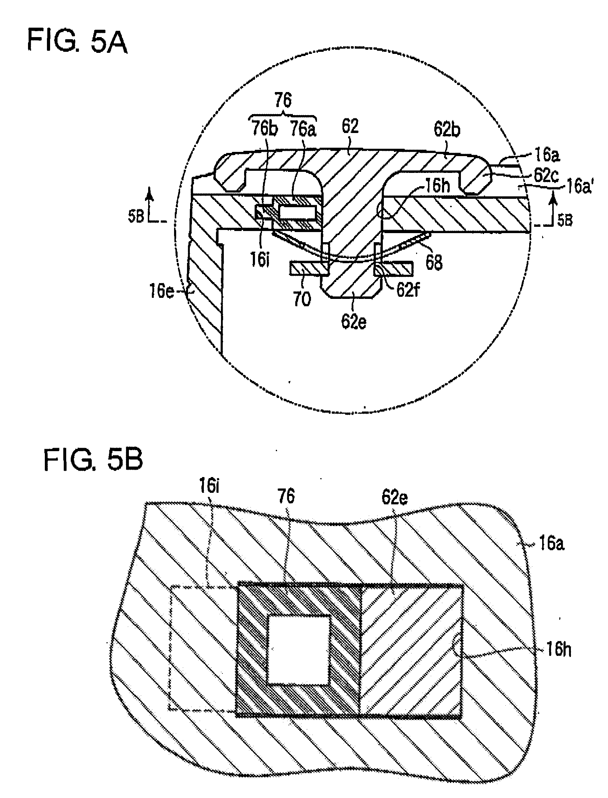

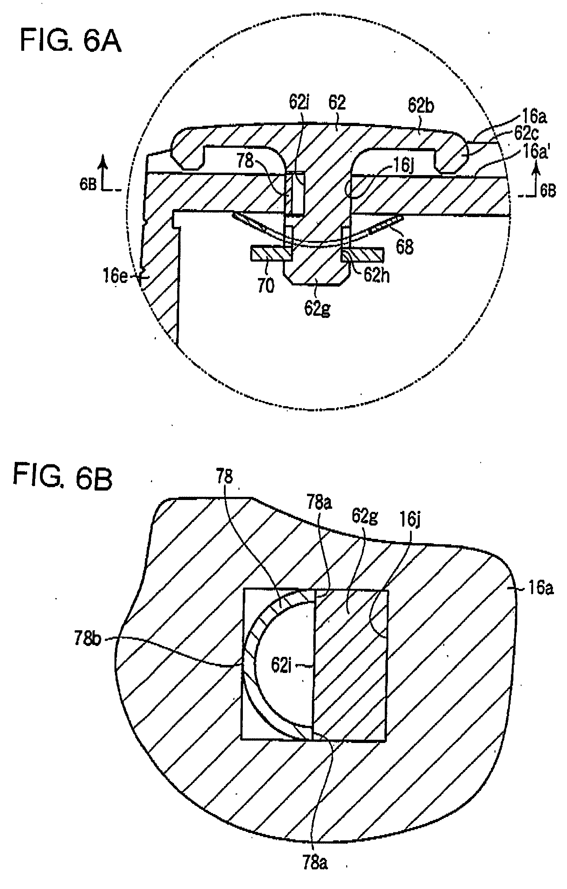

In this embodiment, while the damper member 64 is described as being disposed on the clipping member 62, the damper member 64 may preferably be provided on the clipping member 62 as an integral part thereof. In addition, the damper member 64 may not be provided. In this case, the primary elastic member 66 is brought into direct contact with the shaft portion 62a of the clipping member 62, and the flange portion 62c at the end portion of the circular disc portion 62b is also preferably not provided. Namely, in this embodiment, although the damper member 64 is preferably provided, as will be described in a fourth and fifth embodiments (refer to Figs. 5A and 6A), which will be described later, the damper member 64 is not the essential part of the fishline clipping apparatus.

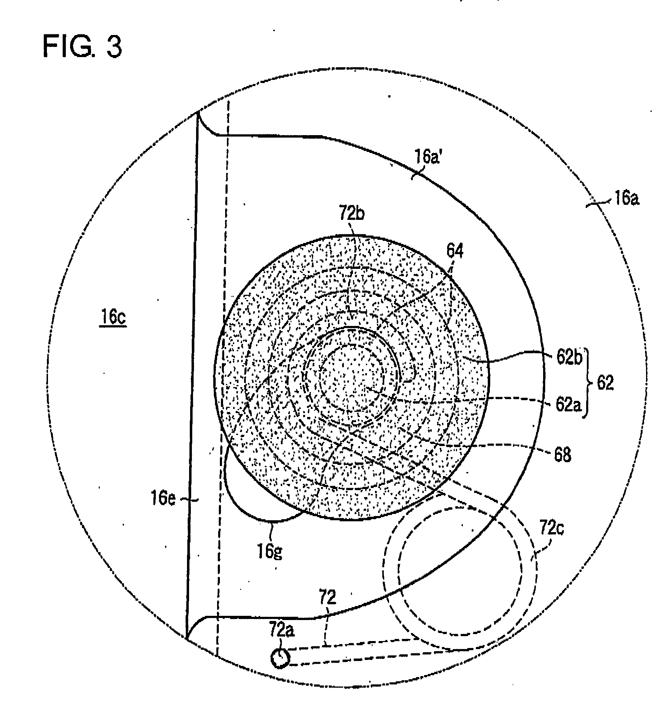

Next, a second non-inventive embodiment will be described using Fig. 3. This embodiment is a modified example to the first embodiment, and like reference numerals will be imparted to members which are like to those described in the first embodiment, to thereby omit the detailed description thereof. This will also be true with a third and fifth embodiments.

As is shown in Fig. 3, in this embodiment, a through hole (hereinafter, reference numeral 16g will be given) formed in a recess portion 16a' of a skirt portion 16a of a spool 16 is formed into an arc-like shape, which is different from the through hole 16d (refer to Figs. 2A to 2C) described in the first embodiment. In addition, the shape of a primary elastic member (hereinafter, reference numeral 72 will be given) differs that of the primary elastic member 66 described in the first embodiment.

The primary elastic member 72 is a spring member, and one end 72a of the primary elastic member 72 is fixed to (supported on) the skirt portion 16a of the spool 16. The primary elastic member 72 is made up of a torsional coil spring which is formed into a substantially S-shape. The other end 72b of the primary elastic member 72 is wound round a damper member 64 (or a shaft portion 62a) which lies in a position situated close to an inner circumferential surface of a stepped wall portion 16e in a direction so as to bias the damper member 64 (or the shaft portion 62a) in a direction in which the damper member 64 (or the shaft portion 62a) is spaced apart from the inner circumferential surface of the stepped wall portion 16e. A loop portion 72c is provided on the primary elastic member 72 in an appropriate position between the end 72a which is fixed to the skirt portion 16a and the other end 72b which is opened and is wound round the damper member 64. By providing the loop portion 72c, the primary elastic member 72 can maintain the biasing force with which the damper member 64 is biased in the direction in which the damper member 64 is spaced apart relative to the inner circumferential surface of the stepped wall portion 16e.

Since the end 72a of the primary elastic member 72 is fixed to the position which is spaced apart from the through hole 16g formed in the recess portion 16a' of the skirt portion 16a of the spool 16 in a longitudinal direction thereof, the biasing force of the primary elastic member 72 acts in a direction in which an arc is substantially drawn from the end 72a of the primary elastic member 72 as a fulcrum. Because of this, a clipping member 62 and the damper member 64 can move within the arc-shaped through hole 16g which is at a right angle to the shaft portion 62a against the biasing force of the primary elastic member 72.

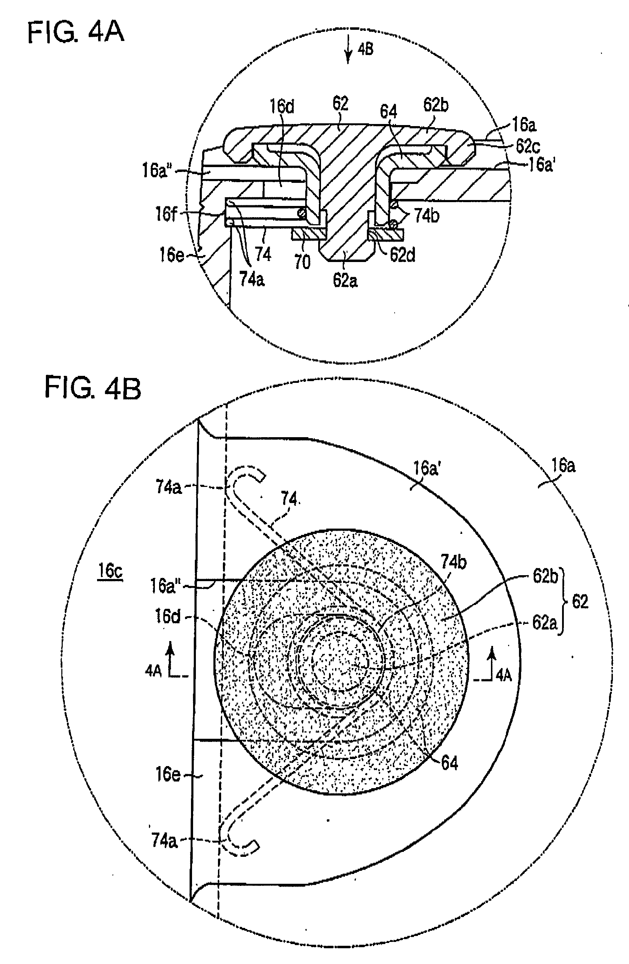

Next, the third inventive embodiment will be described using Fig. 4. This embodiment is a modified example to the first embodiment.

As is shown in Figs. 4A and 4B, in this embodiment according to the present invention, the secondary elastic member 68 described in the first embodiment is removed, and instead, a primary elastic member (hereinafter, reference numeral 74 will be given) is formed so as to be wound round a shaft portion 62a of a clipping member 62 and an outer circumference of a damper member 64.

The primary elastic member 74 is a spring member having two pairs of leg portions 74a and winding portions 74b where the primary elastic member 74 is wound round the clipping member 62 and the damper member 64. As is shown in Fig. 4A, one of the winding portions 74b is in contact with an inner circumferential surface of a skirt portion 16a of a spool 16, and the other winding portion 74b is in contact with a slip-off preventing member 70. Because of this, the winding portions 74b bias the slip-off preventing member 70 downwards in Fig. 4A.

In this way, by the primary elastic member 74 being formed so as to be wound round the shaft portion 62a of the clipping member 62 and the outer circumference of the damper member 64, the primary elastic member 74 can function in the same way as the secondary elastic member 68 described in the first embodiment. Although the primary elastic member 74 has the two pairs of leg portions 74a, the two pairs of leg portions 74a can function in the same way as the pair of leg portions 66a of the primary elastic member 66 of the first embodiment. Namely, only with the primary elastic member 74 provided on a fishline clipping apparatus 60, the functions performed by the primary and secondary elastic members 66, 68 described in the first embodiment can both be obtained.

Next, the fourth non-inventive embodiment will be described using Fig. 5. This embodiment is a modified example to the first embodiment.

In this embodiment, being different from the through hole 16d described in the first embodiment, for example, a rectangular through hole 16h is formed. A longitudinal direction of this through hole 16h is the same direction as that of the through hole 16d described in the first embodiment. In place of the shaft portion 62a of the clipping member 62 described in the first embodiment, a shaft portion (hereinafter, reference numeral 62e will be given) is formed. This shaft portion 62e has a rectangular cross section. A recess portion 62f is formed on the shaft portion 62e, and as has been described in the first embodiment, a secondary elastic member 68 and a slip-off preventing member 70 are disposed in this recess portion 62f.

A primary elastic member (hereinafter, reference numeral 76 will be given) having a rectangular shape, for example, is disposed in the through hole 16h so as to be adjacent to the shaft portion 62e. The primary elastic member 76 is formed of a material such as a rubber material which has a property in which it is deformed elastically when a force of a predetermined magnitude or larger is exerted thereon and then is restored to its original shape when the force is removed therefrom.

A recess portion 16i is formed in the through hole 16h in the recess portion 16a' of a skirt portion 16a of a spool 16 in which a projecting portion 76b, which will be described later, of the primary elastic member 76 is disposed.

The primary elastic member 76 includes a main body 76a which contacts the rectangular shaft portion 62e of a clipping member 62 and the projecting portion 76b which is formed integrally on the main body 76a. The main body76a has a hollow rectangular parallelepiped shape. Because of this, the main body 76a can maintain its rectangular parallelepiped shape when a force of smaller than a predetermined magnitude is exerted thereon and can easily be deformed when a force of the predetermined magnitude or larger is exerted thereon. The projecting portion 76b of the primary elastic member 76 is fitted in the recess portion 16i of the through hole 16h. Because of this, even in the event that the main body 76a is deformed by the force of the predetermined magnitude or larger being exerted thereon, the projecting portion 76b can prevent the slip-off of the primary elastic member 76 from the through hole 16h.

Consequently, when clipping a fishline in a fishline clipping apparatus 60, a circular disc portion 62b of the clipping member 62 is pulled against a biasing force of the secondary elastic member 68. In this state, the fishline is disposed between a surface of the recess portion 16a' of the skirt portion 16a of the spool 16 and the circular disc portion 62b. Then, when the circular disc portion 62b is released, the fishline is clipped on an outer circumferential surface of the recess portion 16a' of the skirt portion 16a of the spool 16 by the circular disc portion 62b of the clipping member 62 by virtue of the biasing force of the secondary elastic member 68. A distance between the circular disc portion 62b and the recess portion 16a' of the skirt portion 16a of the spool 16 which is defined by a flange portion 62c of the clipping member 62 is preferably smaller than a diameter of the fishline. Because of this, the fishline can be clipped by the circular disc portion 62b of the clipping member 62 in an ensured fashion.

In the event that a force is exerted on the fishline, for example, the shaft portion 62e of the clipping member 62 can move along the through hole 16h which is at a right angle to an axial direction of the shaft portion 62e of the clipping member 62 against a biasing force of the primary elastic member 76. Namely, the clipping member 62 can move towards a stepped wall portion 16e. Because of this, even in the event that an abrupt load is exerted on the fishline and/or the fishline clipping apparatus 60 when releasing the fishline is stopped during the use in the bait placing operation, the clipping member 62 moves in a fishline releasing direction against the elastic force of the primary elastic member 76. Consequently, a reduction in load can be realize which would otherwise be exerted on the fishline and/or the fishline clipping apparatus 60 when releasing the fishline is stopped , thereby making it possible to prevent the damage of the fishline clipping apparatus 60 or the damage to or breakage of the fishline.

In this embodiment, while the rubber material is described as being used as the primary elastic member 76, a spring member (a coil spring which is fixed at the recess portion 16i at one end thereof) is also used preferably.

Next, the fifth non-inventive embodiment will be described using Fig. 6. This embodiment is a modified example to the first and fourth embodiments.

As is shown in Fig. 6B, in this embodiment, being different from the through hole 16d described in the first embodiment, a through hole 16j is formed which is not rectangular but square. As is shown in Figs. 6A and 6B, in place of the shaft portion 62a of the clipping member 62 described in the first embodiment, a shaft portion (hereinafter, reference numeral 62g will be given) is formed. This shaft portion 62g has a square cross section. A recess portion 62h is formed on the shaft portion 62g in a position which lies further inwards than an inner circumferential surface of a skirt portion 16a of a spool 16, and as has been described in the first embodiment, a secondary elastic member 68 and a slip-off preventing member 70 are disposed in the recess portion 62h.

A recess portion 62i which is made up of a space having a rectangular parallelepiped shape is formed further on the shaft portion 62g. The recess portion 62i of the shaft portion 62g has a rectangular cross section. The recess portion 62i is formed on a side of the shaft portion 62g which lies close to a stepped wall portion 16e. This recess portion 62i is formed so as to have a height which allows a fishline to be held between a circular disc portion 62b and an outer circumferential surface of a recess portion 16a' of the skirt portion 16a of the spool 16 when the circular disc portion 62b of a clipping member 62 is pulled. A primary elastic member (hereinafter, reference numeral 78 will be given) is disposed in the recess portion 62i. This primary elastic member 78 has a semi-cylindrical shape which is made up of one of two halves resulting when a circular cylinder is divided into two. In the primary elastic member 78, both longitudinally extending ends 78a of the divided semi-cylindrical shape are brought into abutment with an inner circumferential surface of the recess portion 62i of the shaft portion 62g and an outer circumferential surface 78b between the longitudinally extending ends 78a is brought into abutment with the through hole 16j in the recess portion 16a' of the skirt portion 16a. Because of this, the primary elastic member 78 is a spring member which biases the shaft portion 62g in a direction in which the shaft portion 62g is spaced apart from the stepped wall portion 16e.

Consequently, in the event that a force is exerted on a fishline which is clipped between the circular disc portion 62b of the clipping member 62 and an outer circumferential surface of the recess portion 16i of the skirt portion 16a of the spool 16 by a fishline clipping apparatus 60, the shaft portion 62g of the clipping member 62 can move along the recess portion 62i which is at a right angle to an axial direction of the shaft portion 62g against a biasing force of the primary elastic member 78. Namely, the clipping member 62 can move towards the stepped wall portion 16e. Because of this, even in the event that an abrupt load is exerted on the fishline and/or the fishline clipping apparatus 60 when releasing the fishline is stopped during the use in the bait placing operation, the clipping member 62 moves in a fishline releasing direction against the elastic force of the primary elastic member 78. Consequently, a reduction in load can be realize which would otherwise be exerted on the fishline and/or the fishline clipping apparatus 60 when releasing the fishline is stopped , thereby making it possible to prevent the damage of the fishline clipping apparatus 60 or the damage to or breakage of the fishline.

In the first to fifth embodiments, while the fishline clipping apparatus 60 is described as being provided at the skirt portion 16a of the spool 16 of the spinning reel 10, the position where the fishline clipping apparatus 60 is provided is not limited to the skirt portion 16a of the spool 16, and hence, the fishline clipping apparatus 60 can be provided at other portions of the spinning reel 10 as required.

In addition, although not shown, a similar fishline clipping apparatus 60 may be disposed in an appropriate position on a reel main body of a fixed spool reel or an electric reel.

In addition, while the through holes 16d, 16g, 16h, 16j in the first to fifth embodiments have the elongated hole shape, the arc-like shape, the rectangular shape and the square shape, respectively, which all extend in the front-rear direction which is at a right angle to the shaft portion of the clipping member, the shape and orientation in the front-rear direction of the through holes in the invention are not limited thereto. For example, a through hole may be adopted which has an elongated hole shape which is inclined rightwards or leftwards relative to the direction of a spool shaft or a through hole may have a fan-like shape which expands to the front of the spool. In addition, in the case of the through hole being adopted which has the elongated hole shape which is inclined rightwards or leftwards relative to the direction of the spool shaft, the clipping member in the through hole is preferably biased by an elastic member which is a torsional coil spring formed into a substantially S-shape as in the second embodiment. In the case of the through hole which is inclined to the front relative to the direction of the spool shaft so as to approach a fixed end of the elastic member which is a coil spring, the coil spring is preferably configured so as to bias the clipping member in a direction in which the clipping member is spaced apart from the fixed end. In either of the cases, the shaft portion of the clipping member which moves backwards and forwards relative to the through hole formed long in the front-rear direction is biased to the rear side by the spring provided in an appropriate position inside the skirt portion.

## Claims

1. A fishing reel (10) comprising:
a spool (16);
a through hole (16d; 16h; 16j) formed in the spool (16);
a clipping member (62) including a fishline clipping portion and a shaft portion (62a) which is inserted into the through hole (16d; 16h; 16j) so as to move in a direction which is at a right angle to an axial direction of the shaft portion (62a) and which is fitted and retained in the through hole (16d; 16h; 16j) in the axial direction of the shaft portion (62a) for holding a fishline between the fishline clipping portion and the spool (16); and
an elastic member (74) for biasing the shaft portion (62a) in a direction which is at a right angle to the axial direction of the shaft portion (62a)
**characterized in that** the elastic member (74) biases the shaft portion (62a) radially inwards of the spool (16) and in the front rear direction of the spool (16) along the through hole (16d; 16h; 16j) and is provided between the shaft portion (62a) of the clipping member (62) and an inner surface of the spool (16).

2. The fishing reel according to claim 1, wherein
the through hole (16d; 16h; 16j), is formed into an elongated hole which extends in a front-rear direction of the spool (16), and
the elastic member (74) is a spring member which biases the shaft portion (62a) to a rear side of the elongated hole of the through hole (16d; 16h; 16j).

3. The fishing reel (10) according to claim 1 or 2, wherein a damper member (64) is provided between the spool (16) and the fishline clipping portion of the fishing reel (10).

4. The fishing reel (10) according to claim 1, wherein the through hole (16d; 16h; 16j) is formed into an elongated hole shape, an arc-like shape, a rectangular shape or a square shape.

## Patentansprüche

1. Angelrolle (10) umfassend:
eine Spule (16);
ein Durchgangsloch (16d; 16h; 16j), ausgebildet in der Spule (16);
ein Klemmelement (62) einschließlich eines Angelschnurklemmabschnittes und eines Schaftabschnittes (62a), welcher in das Durchgangsloch (16d; 16h; 16j) eingeführt ist, um sich in einer Richtung zu bewegen, die zu einer axialen Richtung des Schaftabschnitts (62a) in einem rechten Winkel steht, und ausgebildet ist und in dem Durchgangsloch (16d; 16h; 16j) in der axialen Richtung des Schaftabschnittes (62a) gehalten ist, um eine Angelschnur zwischen dem Angelschnurklemmabschnitt und der Spule (16) zu halten; und
ein elastisches Element (74) zum Vorspannen des Schaftabschnittes (62a) in einer Richtung, welche sich in einem rechten Winkel zu der axialen Richtung der Schaftabschnittes (62a) befindet
**dadurch gekennzeichnet, dass** das elastische Element (74) den Schaftabschnitt (62a) radial nach innen von der Spule (16) und in der Vorwärts-Rückwärts Richtung der Spule (16) entlang des Durchgangslochs (16d; 16h; 16j) vorspannt und zwischen dem Schaftabschnitt (62a) des Klemmelements (62) und einer Innenfläche der Spule (16) bereitgestellt ist.

2. Angelrolle nach Anspruch 1, wobei
das Durchgangsloch (16d; 16h; 16j) als ein längliches Loch ausgebildet ist, welches sich in einer Vorwärts-Rückwärts Richtung der Spule (16) erstreckt, und
das elastische Element (74) ein Federelement ist, welches den Schaftabschnitt (62a) zu einer Rückseite des länglichen Loches des Durchgangslochs (16d; 16h; 16j) vorspannt.

3. Angelrolle (10) nach Anspruch 1 oder 2, wobei ein Dämpfungselement (64) zwischen der Spule (16) und dem Angelschnurklemmabschnitt der Angelspule (10) bereitgestellt ist.

4. Angelrolle (10) nach Anspruch 1, wobei das Durchgangsloch (16d; 16h; 16j) in einer Form eines länglichen Lochs, einer bogenartigen Form, einer rechteckigen Form oder einer quadratischen Form ausgebildet ist.

## Revendications

1. Moulinet de pêche (10) comprenant :
une bobine (16) ;
un trou débouchant (16d ; 16h ; 16j) formé dans la bobine (16) ;
un élément d'attache (62) comprenant une partie d'attache de ligne de pêche et une partie d'arbre (62a) qui est insérée dans le trou débouchant (16d ; 16h ; 16j) afin de se déplacer dans une direction qui est en angle droit par rapport à une direction axiale de la partie d'arbre (62a) et qui est montée et retenue dans le trou débouchant (16d ; 16h ; 16j) dans la direction axiale de la partie d'arbre (62a) pour maintenir une ligne de pêche entre la partie d'attache de ligne de pêche et la bobine (16) ; et
un élément élastique (74) pour solliciter la partie d'arbre (62a) dans une direction qui est en angle droit par rapport à la direction axiale de la partie d'arbre (62a),
**caractérisé en ce que** l'élément élastique (74) sollicite la partie d'arbre (62a) radialement vers l'intérieur de la bobine (16) et dans la direction avant - arrière de la bobine (16) le long du trou débouchant (16d ; 16h ; 16j) et est prévu entre la partie d'arbre (62a) de l'élément d'attache (62) et une surface interne de la bobine (16).

2. Moulinet de pêche selon la revendication 1, dans lequel :
le trou débouchant (16d ; 16h ; 16j) est formé dans un trou allongé qui s'étend dans une direction avant-arrière de la bobine (16), et
l'élément élastique (74) est un élément de ressort qui sollicite la partie d'arbre (62a) vers un côté arrière du trou allongé du trou débouchant (16d ; 16h ; 16j).

3. Moulinet de pêche (10) selon la revendication 1 ou 2, dans lequel un élément d'amortisseur (64) est prévu entre la bobine (16) et la partie d'attache de ligne de pêche du moulinet de pêche (10).

4. Moulinet de pêche (10) selon la revendication 1, dans lequel le trou débouchant (16d ; 16h ; 16j) est formé selon une forme de trou allongé, une forme d'arc, une forme rectangulaire ou une forme carrée.
